# FASCICULE DE BREVET EUROPEEN

(11) **EP 0 418 774 B1**
(45) Date de publication et mention de la délivrance du brevet: **03.11.1993**
(21) Numéro de dépôt: 90117834.3
(22) Date de dépôt: 17.09.1990
(51) Int. Cl.: H01M 2/26, H01M 4/04

(54) **Procédé de fabrication d'une électrode à support de type mousse pour générateur électrochimique et électrode obtenue par ce procédé**
Verfahren zur Herstellung einer Elektrode mit schaumförmigem Träger für elektrochemischen Generator und bei diesem Verfahren erhaltene Elektrode
Process of manufacturing an electrode with spongiform support for electrochemical generator and electrode obtained thereby

(30) Priorité: 22.09.1989 FR 8912471
(43) Date de publication de la demande: 27.03.1991
(73) Titulaire: SAFT (inscrite au Registre du Commerce sous le numéro 343 588 737), F-93230 Romainville (FR)
(72) Inventeur: Grange-Cossou, Michel, F-33110 Le Bouscat (FR); Torregrossa, William, F-16440 Roulet-Saint-Estèphe (FR)
(74) Mandataire: Weinmiller, Jürgen

(56) Documents cités:
- PATENT ABSTRACTS OF JAPAN, vol. 11, no. 363 (E-560)[2810], 26 novembre 1987; & JP-A-62 136 759 (MATSUSHITA ELECTRIC IND. CO., LTD) 19-06-1987
- PATENT ABSTRACTS OF JAPAN, vol. 13, no. 81 (E-719)[3429], 23 février 1989; & JP-A-63 261 673 (SANYO ELECTRIC CO., LTD) 28-10-1988
- PATENT ABSTRACTS OF JAPAN, vol. 11, no. 110 (E-496)[2557], 7 avril 1987; & JP-A-61 259 454 (MATSUSHITA ELECTRIC IND. CO., LTD) 17-11-1986
- PATENT ABSTRACTS OF JAPAN, vol. 10, no. 91 (E-394)[2148], 9 avril 1986; & JP-A-60 235 360 (YUASA DENCHI K.K.) 22-11-1985
- PATENT ABSTRACTS OF JAPAN, vol. 6, no. 42 (E-98)[920], 16 mars 1982; & JP-A-56 159 066 (YUASA DENCHI K.K.) 08-12-1981

## Description

La présente invention concerne un procédé de fabrication d'une électrode à support de type mousse pour générateur électrochimique et une électrode obtenue par ce procédé. Elle se rapporte notamment aux générateurs électrochimiques à électrolyte alcalin dont au moins une électrode comporte un support poreux métallique chargé de matière active. Ce support poreux présente une structure matricielle comparable à une éponge dont les cellules sont connectées les unes aux autres dans un réseau tridimensionnel : il est désigné par le terme "mousse". Avant chargement par la matière active, la porosité de la mousse est supérieure à 95 %.

Après chargement, l'électrode est comprimée de façon à ce que son épaisseur soit ajustée, ce qui facilite son assemblage, et assure le bon fonctionnement du générateur.

Les générateurs concernés peuvent comporter des électrodes planes, mais le plus souvent ces électrodes sont enroulées en spirales.

La liaison d'une telle électrode à une borne du générateur implique la mise en oeuvre d'une connexion métallique rapportée.

Cette connexion pose un problème car il n'est pas possible de la souder sur la mousse lorsqu'elle est chargée de matière active.

Si on envisage d'effectuer la soudure sur la mousse non chargée, la préparation de la surface à souder nécessite une opération supplémentaire et a l'inconvénient de réduire la surface active de l'électrode. En outre une telle méthode présente l'inconvénient de la fiabilité moyenne de la soudure des composants de faible épaisseur.

Il ne paraît pas possible non plus d'agrafer une connexion en mousse sur le support en mousse. Par contre, il est possible d'agrafer sur un tel support une connexion formée d'un feuillard métallique ; bien entendu ce procédé a l'inconvénient de laisser apparaître une surépaisseur sur l'électrode, de masquer une partie de sa surface électrochimiquement active et de la rigidifier localement, ce qui est gênant en cas de spiralage.

On peut à la rigueur envisager de découper la mousse chargée de matière active de manière à faire apparaître une languette de connexion. Mais il s'agit d'une opération coûteuse car elle entraîne une perte de mousse et une perte de matière active.

La présente invention a pour but d'éviter ces inconvénients et de mettre en oeuvre un procédé simple et fiable permettant de réaliser ladite connexion.

La présente invention a pour objet un procédé de fabrication d'une électrode à support de type mousse pour générateur électrochimique, selon lequel on part dudit support présentant une porosité supérieure à 95 %, on le charge de matière active et on le comprime pour ajuster son épaisseur, caractérisé par le fait que l'on met en oeuvre au moins une connexion en mousse, analogue à celle du support, exempte de matière active, qu'on la dispose sur ledit support chargé de matière active et que l'on utilise l'opération de compression du support pour faire pénétrer ladite connexion dans ce support.

Aucun emplacement privilégié de la connexion ne doit être préparé sur la surface active de l'électrode. La mousse constituant la connexion a été préalablement découpée dans une mousse non chargée de matière active, non comprimée, comparable mais non nécessairement identique à la mousse constituant le support de l'électrode. L'épaisseur de la connexion avant compression est comparable, mais non nécessairement identique à celle du support de l'électrode.

La compression simultanée de la connexion et du support de l'électrode chargée entraîne une interpénétration de leurs structures tridimensionnelles, et ceci de manière suffisante pour obtenir une liaison adéquate.

Un tel procédé présente notamment les avantages suivants :
- La simplicité de la forme géométrique de la connexion et de sa mise en oeuvre.
- Une moins grande sollicitation mécanique de l'électrode au moment de sa liaison avec sa connexion, qu'avec les procédés antérieurs, ce qui autorise l'utilisation d'un grammage plus faible pour le support en mousse de l'électrode.
- L'absence d'opérations préliminaires de préparation du support en mousse de l'électrode.
- Une réduction négligeable de la surface active de l'électrode car la zone de liaison conserve une porosité utile suffisante pour son bon fonctionnement.

La présente invention a également pour objet une électrode obtenue à l'aide du procédé selon l'invention.

Une telle électrode comporte un support en mousse chargé de matière active incorporant au moins une connexion électrique présentant une structure en mousse comparable à celle dudit support, et exempte de matière active, les structures poreuses tridimensionnelles des mousses dudit support et de ladite connexion s'étant interpénétrées et liées par compression.

De préférence, le grammage dudit support et de la mousse de ladite connexion est compris entre 3 g/dm² et 6 g/dm².

Ladite connexion peut être liée audit support de l'électrode suivant une surface comprise entre 0,5 % et 50 % de sa surface.

D'autres caractéristiques et avantages de la présente invention apparaîtront au cours de la description suivante d'un mode de réalisation donné à titre illustratif mais nullement limitatif.

Dans le dessin annexé :
- La figure 1 est une vue très schématique en perspective montrant le support d'une électrode et sa connexion selon l'invention avant l'opération de compression.
- La figure 2 est une vue analogue à celle de la figure 1 après l'opération de compression.

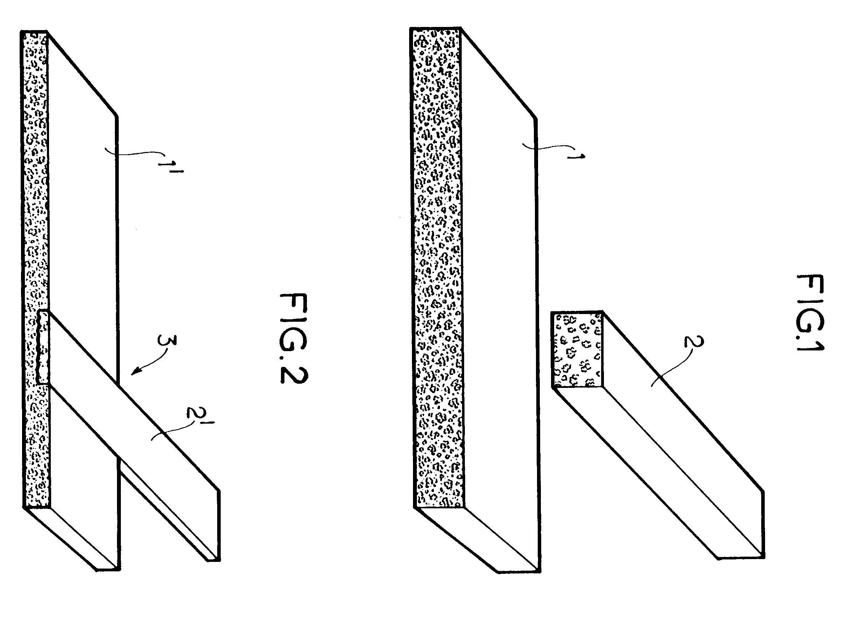

On voit dans la figure 1 le support en mousse de nickel 1 présentant un grammage de 6 g/dm², une épaisseur de 1,6 mm, une longueur de 170 mm, une largeur de 30 mm. Il est chargé de 17 g/dm² de matière active à base d'hydroxyde de nickel.

Une connexion en mousse 2 de même grammage et de même épaisseur mais de longueur 48 mm et de largeur 5 mm est également préparée. La connexion 2 est présentée sur le support 1 de façon à être comprimée sur toute la largeur de ce support et à dépasser sur un grand côté d'une longueur de 18 mm. L'ensemble est comprimé entre les plateaux d'une presse de façon à atteindre 0,7 mm d'épaisseur.

On obtient l'électrode 3 de la figure 2 avec le support d'électrode comprimé 1' et la connexion comprimée 2'. L'électrode ainsi équipée de sa connexion peut être spiralée en face d'une électrode négative à base de cadmium et raccordée au couvercle du générateur par une soudure électrique classique.

Dans un second exemple de mise en oeuvre, on utilise un support d'électrode et deux connexions dont la mousse a un grammage de 3,5 g/dm². Les deux connexions sont placées en vis à vis, au recto et au verso du support et présentent ainsi un grammage total de 7 g/dm².

Dans un troisième exemple de mise en oeuvre, le support de l'électrode est une mousse de nickel présentant un grammage de 3,5 g/dm², une épaisseur de 1,6 mm, une longueur de 128 mm et une largeur de 30 mm.

Cette mousse est chargée de matière active à base d'hydrure d'alliage métallique à raison de 20 g/dm².

Une connexion en mousse présentant un grammage de 6 g/dm², une épaisseur de 1,6 mm, une longueur de 48 mm et une largeur de 6 mm est également préparée.

La connexion est présentée sur le support de l'électrode de façon à être comprimée sur toute la largeur de ce support et à dépasser sur un grand côté d'une longueur de 12 mm. L'ensemble est comprimé entre les plateaux d'une presse de façon à atteindre 0,4 mm d'épaisseur. L'électrode ainsi équipée de sa connexion peut être spiralée en face d'une électrode positive à hydroxyde de nickel et raccordée au boîtier du générateur par une soudure électrique classique.

Bien entendu, l'invention n'est pas limitée aux exemples qui viennent d'être décrits.

On pourra, sans sortir du cadre de l'invention remplacer tout moyen par un moyen équivalent.

## Revendications

1. Procédé de fabrication d'une électrode à support de type mousse pour générateur électrochimique, selon lequel on part dudit support présentant une porosité supérieure à 95 %, on le charge de matière active et on le comprime pour ajuster son épaisseur, caractérisé par le fait que l'on met en oeuvre au moins une connexion en mousse (2), analogue à celle du support, exempte de matière active, qu'on la dispose sur ledit support (1) chargé de matière active et que l'on utilise l'opération de compression du support pour faire pénétrer ladite connexion dans ce support.

2. Procédé de fabrication selon la revendication 1, caractérisé par le fait que deux connexions sont disposées en vis à vis de part et d'autre dudit support de l'électrode.

3. Electrode pour générateur électrochimique comportant un support en mousse chargé de matière active, caractérisée par le fait qu'elle incorpore au moins une connexion électrique (2') présentant une structure en mousse comparable à celle dudit support (1') et exempte de matière active, les structures poreuses tridimensionnelles des mousses dudit support et de ladite connexion s'étant interpénétrées et liées par compression.

4. Electrode pour générateur électrochimique selon la revendication 3, caractérisée par le fait que le grammage dudit support (1') et de la mousse de ladite connexion (2') est compris entre 3 g/dm² et 6 g/dm².

5. Electrode pour générateur électrochimique selon l'une des revendications 3 et 4, caractérisée par le fait que ladite connexion est liée audit support de l'électrode suivant une surface comprise entre 0,5 % et 50 % de sa surface.

6. Electrode pour générateur électrochimique selon l'une des revendications 3 à 5, caractérisée par le fait que le matériau de la mousse dudit support et de ladite connexion est du nickel.

## Patentansprüche

1. Verfahren zur Herstellung einer Elektrode mit einem schaumartigen Träger für einen elektrochemischen Generator, bei dem man von einem Träger mit einer Porosität größer als 95% ausgeht, diesen Träger mit aktivem Material befrachtet und ihn dann auf eine gewünschte Dicke komprimiert, dadurch gekennzeichnet, daß man mindestens eine schaumartige Anschlußfahne (2) ähnlicher Struktur wie der Träger verwendet, die aber kein aktives Material enthält, daß man die Anschlußfahne auf den mit aktivem Material versehenen Träger (1) legt und daß man dann den Träger komprimiert, um die Anschlußfahne in den Träger eindringen zu lassen.

2. Herstellungsverfahren nach Anspruch 1, dadurch gekennzeichnet, daß zwei Anschlußfahnen einander auf beiden Seiten des Elektrodenträgers gegenüberliegend angebracht werden.

3. Elektrode für einen elektrochemischen Generator mit einem schaumartigen Träger, der mit aktivem Material versehen ist, dadurch gekennzeichnet, daß die Elektrode mindestens eine elektrische Anschlußfahne (2') besitzt, die eine ähnliche schaumartige Struktur wie der Träger (1') besitzt, aber kein aktives Material enthält, wobei die dreidimensionalen porösen Strukturen des Schaums des Trägers und der Anschlußfahne ineinander eindringen und durch Kompression miteinander verbunden werden.

4. Elektrode für einen elektrochemischen Generator nach Anspruch 3, dadurch gekennzeichnet, daß das Flächengewicht des Trägers (1') und des Schaums der Anschlußfahne (2') zwischen 3 g/dm² und 6 g/dm² liegt.

5. Elektrode für einen elektrochemischen Generator nach einem der Ansprüche 3 und 4, dadurch gekennzeichnet, daß die Anschlußfahne mit der Elektrode über eine Teilfläche verbunden ist, die zwischen 0,5 und 50% seiner Oberfläche beträgt.

6. Elektrode für einen elektrochemischen Generator nach einem der Ansprüche 3 bis 5, dadurch gekennzeichnet, daß das schaumartige Material des Trägers und der Anschlußfahne aus Nickel besteht.

## Claims

1. A process for making an electrode with a porous support for an electrochemical cell, wherein the process includes providing a support of porous material having a porosity greater than 95 percent, loading the support with an active material to produce an electrode, and compressing the loaded electrode so as to adjust its thickness, characterized in that at least one connector (2) is made of a porous material similar to that of the support, but which is not loaded with active material, that the porous connector is positioned on the support (1) which is loaded with active material, and that a compression operation is performed on the support so as to cause the porous connector to penetrate the support.

2. A process according to claim 1, characterized in that two connectors are positioned facing each other on either side of the electrode support.

3. An electrode for an electrochemical cell, the electrode including a support made of a material having a porous structure and loaded with active material, characterized in that the electrode has at least one electrical connector (2') made of a material having a porous structure similar to that of the support but which is not loaded with active material, the three-dimensional porous structures of the porous materials of the support and of the electrical connector being interpenetrated and bonded by compression.

4. An electrode for an electrochemical cell according to claim 3, characterized in that the weight per unit area of the support (1') and of the porous material of the connector (2') is in the range between 3 g/dm² and 6 g/dm².

5. An electrode for an electrochemical cell according to claim 3 or 4, characterized in that the connector is connected to the electrode support over an area in the range from 0,5 percent to 50 percent of the surface of the electrode.

6. An electrode for an electrochemical cell according to claim 3, 4 or 5, characterized in that the material fo the porous support and of the porous connector is nickel.
